# EUROPÄISCHE PATENTANMELDUNG

(11) **EP 0 989 371 A2**
(43) Veröffentlichungstag der Anmeldung: **29.03.2000**
(21) Anmeldenummer: 99203079.1
(22) Anmeldetag: 20.09.1999
(51) Int. Cl.: F24D 3/12, F24D 19/10

(54) **Regelsystem für Heiz- bzw. Kühleinrichtungen**

(30) Priorität: 21.09.1998 IT BZ980056
(71) Anmelder: Markart, Artur, 39040 Campo di Trens (BZ) (IT)
(72) Erfinder: Markart, Artur, 39040 Campo di Trens (BZ) (IT)
(74) Vertreter: Faraggiana, Vittorio, Dr. Ing.

(57) **Zusammenfassung**

Beschrieben wird ein Regelsystem für Heiz- bzw. Kühleinrichtungen. Erfindungsgemäß ist eine Heiz-/Kühleinrichtung durch einen, eventuell an der Basis (5) mit Rollorganen versehenen Tragrahmen (6, 6a), aus starren am Tragrahmen (6, 6a) befestigten Isolierplatten (7), durch Rohre (S) bevorzugter Weise kapillarer Art, beispielsweise nach der Art die für Wandheizsysteme verwendet wird, aus einer Materialmasse hoher Wärmeleitfähigkeit (9), in der und/oder durch die die Rohre (S) eingebettet bzw. verkleidet sind und eventuell durch eine an der Masse (9) angebrachte Verkleidung (10) gebildet.

## Beschreibung

Die Erfindung betrifft ein Regelsystem für Heiz- bzw. Kühleinrichtungen, die in einem zu heizenden bzw. kühlenden Raum fest oder verstellbar einbaubar sind und über ein Regelsystem mit einem einzigen oder mehrfachen Energiesystem verbunden sind.

Bekannt ist das Problem, einen Wohnraum innerhalb kurzer Zeit auf eine angenehme Temperatur zu bringen, wobei die zur Verfügung stehende Energiequelle benützt wird; das Problem erweist sich insbesondere während der Übergangszeiten, in kalten bzw. warmen Perioden außerhalb der Saison oder in Fällen, wo es notwendig ist, daß die Raumtemperatur innerhalb einer eng bemessenen Zeit erhöht oder abgesenkt werden muß. Oftmals werden diese Forderungen durch einen elektrischen Ofen, der eventuell mit einem Lüfter versehen ist, erfüllt, der die Trägheitszeiten der zentralen Heizungsanlage verkürzt, um die gewünschte Temperatur zu erreichen. Bei der Abkühlung des Raumes werden Luft umwälzende Ventilatoren oder lokale Klimageräte verwendet.

Die Zusatzöfen weisen den Mangel auf, daß sie viel Stromenergie verbrauchen, nicht für die eventuelle Ausbeutung von alternativer Energie geeignet, nicht mit schon zur Verfügung stehenden Energiesystemen verbindbar und nicht derart einstellbar sind, daß eine gleichförmige Verteilung der Wärme im Raum erhalten wird. Überdies weisen die Zusatzöfen, Ventilatoren oder Klimageräte bekannter Art Ausbildungen und Verkleidungen auf, die kaum der Einrichtung des zu erwärmenden bzw. kühlenden Wohnraumes anpaßbar sind.

Die vorliegende Erfindung stellt sich die Aufgabe, Regelsystem für Heiz- bzw. Kühleinrichtungen auszuführen, die mit verschiedenen Energiesystemen verbindbar sind, die unterschiedlichsten Ausbildungen annehmen können, verschiedenen Materialien verkleidet und mit einem Einschalt-, Einstell- und Ausschaltsystem autonomer, eventuell programmierbarer und/oder fernbedienbarer Art versehen werden können.

Zur Lösung dieser Aufgabe schlägt die Erfindung ein Regelsystem für Heiz- bzw. Kühleinrichtungeneinen, die aus einem Grundrahmen bevorzugter Art aus Metall gebildet sind, der außen durch starre Isolierplatten verkleidet ist, auf deren Außenflächen bevorzugter Weise Kapillarröhrchen beispielsweise der Art CLINA/BEKA angebracht werden, die für Wandheiz- bzw. kühlsysteme verwendet werden. Diese Röhrchen werden in und/oder mit wärmeleitfähigem Material eingebettet bzw. verkleidet, an dem auf herkömmliche Art und Weise Fliesen oder Platten oder Verkleidungsschichten angebracht werden können. Der erfindungsgemäße Heiz-/Kühleinrichtung kann auf diese Art und Weise die Form und das Aussehen eines herkömmlichen Kachelofens, eines Ofens rustikaler Art oder eines Ofens mit futuristischem Aussehen annehmen. Der erfindungsgemäße Einrichtung kann überdies nach der Art einer festen Installation sein, oder mit einer Basis versehen sein, die Rollorgane zu deren Verstellung besitzt; die Verbindung mit dem Regelsystem und dem zur Verfügung gestellten Energiesystem kann über zwei Schläuche oder Rohre erfolgen. Das Energiesystem kann beispielsweise eine zentrale Heizungsanlage, eine Warmwasseranlage, eine Solaranlage und/oder eine Stromanlage, eine zentrale oder autonome Kühlanlage oder kaltes Wasser sein. Die erfindungsgemäße Heiz-/Kühleinrichtung kann teilweise oder komplett im Werk oder an der Einbaustelle eingebaut werden. Die Erfindung schließt nicht aus, daß der Strahl-/Kühlkörper ein Einrichtungsgegenstand ist oder die Kapillarröhrchen an einem Einrichtungsgegenstand angebracht sind.

Zur Verbindung der Heiz-/Kühleinrichtung mit dem eingebauten Energiesystem schlägt die Erfindung die Verwendung eine Wärmetauschers vor, dessen primärer Kreis mit dem eingebauten Energiesystem verbunden ist, während der sekundäre Kreis mit den Kapillarröhrchen des erfindungsgemäßen Heiz-/Kühleinrichtungs verbunden ist, wobei nur im Fall einer Verbindung mit einem elektrischen oder solaren Warmwasserspeicher eine unmittelbare Verbindung ohne Wärmetauscher vorteilhaft sein kann. Zur thermischen Regelung der Heiz-/Kühleinrichtung gemäß der Erfindung ist es möglich, eine Mischung am sekundären Kreislauf aufgrund der Erfassung der Temperatur am Vorlauf des Heiz-/Kühleinrichtungskreislaufes auszunutzen.

Sowohl für den sekundären Kreislauf des Heiz-/Kühleinrichtung als auch für jenen primären des Energiesystems ist immer eine Pumpe erforderlich; nur wenn kein Wärmetauscher verwendet wird, beispielsweise bei einer direkten Verbindung mit einem elektrischen oder solarem Warmwasserspeicher ist, ist nur eine einzige Pumpe im Kreislauf des Heiz-/Kühleinrichtungs erforderlich.

Die erfindungsgemäße Heiz-/Kühleinrichtung erreicht wegen der erheblichen durch Kapillarröhrchen belegte Oberfläche innerhalb kürzester Zeit die gewünschte Oberflächentemperatur, wobei eine erhebliche Wärmemenge innerhalb kurzer Zeit dem bzw. vom Raum abgegeben bzw. absorbiert wird.

Aufgrund des im Anspruch 6 beschriebenen Regelsystems ist eine Vielzahl von verschiedenen Energiequellen, auch in Kombination mit einander, zuschaltbar.

Die Erfindung wird nachstehend aufgrund eines bevorzugten Ausführungsbeispieles der erfindungsgemäßen Heiz-/Kühleinrichtung und aufgrund von einigen Beispielen der thermischen Regelung und der Verbindung mit verschiedenen Energiesystemen näher erläutert, die schematisch in der beigelegten Zeichnung dargestellt sind, die beispielsweise und nicht beschränkender Art sein soll.
- Figur 1: erläutert in Seitenansicht und teilweise im Schnitt eine erfindungsgemäße Heiz-/Kühleinrichtung, die außen mit Fliesen verkleidet ist.
- Figur 2: ist der Querschnitt durch die erfindungsgemäße Heiz-/Kühleinrichtung gemäß der Ebene II-II aus Figur 1.
- Figur 3: ist ein Betriebsschema der Verbindung einer Heiz-/Kühleinrichtung mit einem Energiesystem und Regelung der Temperatur über ein am sekundären Kreislauf der Heiz-/Kühleinnerichtung vorgesehenen Mischventil.
- Figur 4: ist ein Betriebsschema der Verbindung einer erfindungsgemäßen Heiz-/Kühleinrichtung mit einem Energiesystem unter Regelung der Temperatur über ein am primären Kreislauf des Energiesystems vorgesehenes Mischventil.
- Figur 5: ist ein Betriebsschema der Verbindung und der thermischen Regelung einer erfindungsgemäßen Heiz-/Kühleinrichtung, die unmittelbar durch einen elektrischen Warmwasserspeicher gespeist wird, und mit einem zwischen Vorlauf und Rücklauf eingebautem Mischventil.
- Figur 6: ist ein Betriebsschema der Verbindung und der thermischen Regelung einer erfindungsgemäßen Heiz-/Kühleinrichtung, die mit einem Warmwasserspeicher oder einem Wärmesammler verbunden ist, mit einem Mischventil am sekundären Kreislauf der Einrichtung und mit elektrischem Sperrventil, jeweils zur Ablenkung, am Rücklauf des primären Kreislaufes.
- Figur 7: zeigt ein Betriebsschema einer Regelanlage, die sowohl für die Erwärmung als auch für die Kühlung eines Raumes bestimmt ist.

Die erfindungsgemäße Heiz-/Kühleinrichtung ist aus einem Innenrahmen 6 aus Metall gebildet, der aus Metallprofilen und aus Tragprofilen 6a zur Befestigung der wärmeisolierenden, starren Platten 7 besteht, auf welche die Rohre S, bevorzugter Weise kapillarer Ausbildung, nach der Art angebracht werden, die für Wandheizsysteme verwendet wird. Die Kapillarrohre S sind in und/oder einer Masse hoher Wärmeleitfähigkeit 9 eingegossen bzw. verkleidet, auf der Fliesen aus verschiedenen Materialien 10 oder Platten aus thermisch leitfähigem Material angebracht werden können. Auf vorteilhafte Weise ist die erfindungsgemäße Heiz-/Kühleinrichtung mit einer Basis 5 versehen, die eventuell Rollorgane und Verbindungsrohre S1 besitzt.

Die Form und die Abmessungen des Rahmens 6 und der Platten 7, an denen die Kapillarrohre S angebracht sind, können verschieden sein, so wie auch die Außenverkleidung in verschiedenem Material ausgeführt sein kann.

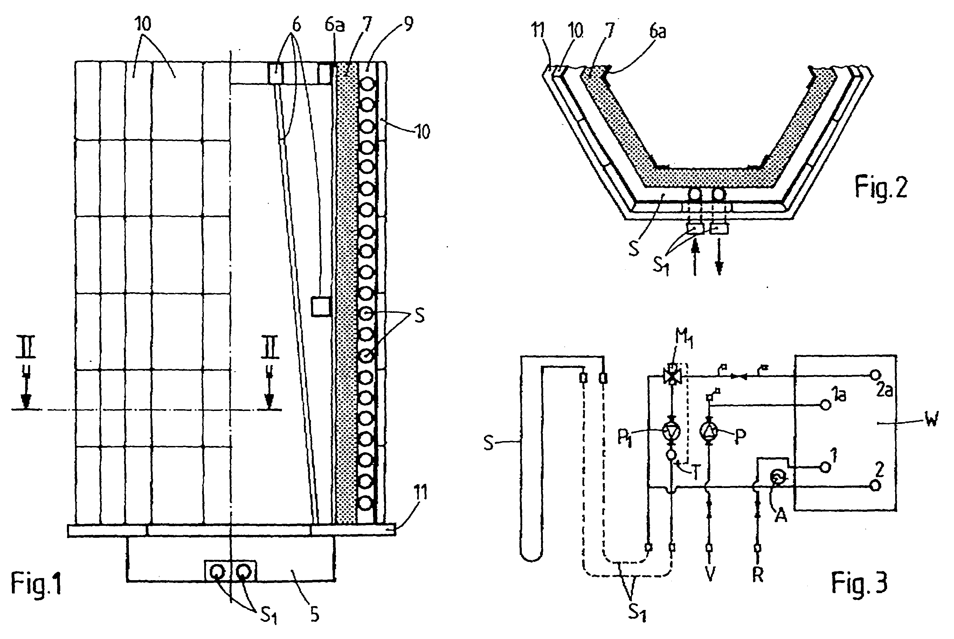

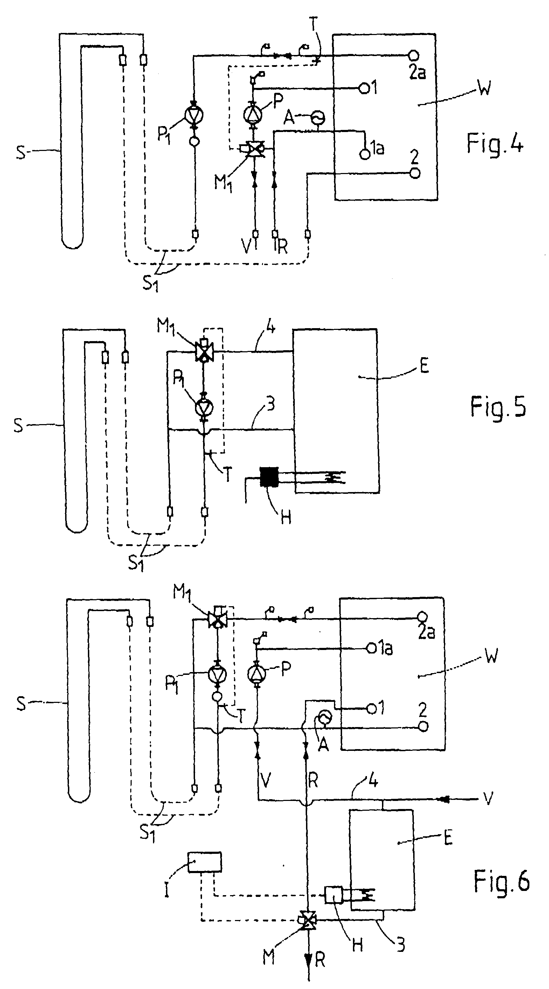

Gemäß der Erfindung erfolgt die Verbindung der Heiz-/Kühleinrichtung S bevorzugter Weise über einen Wärmetauscher W. Der primäre Kreislauf 1, 1a des Wärmetauschers besteht aus dem Kreislauf des Energiesystems, wo bevorzugter Weise am Vorlauf V eine Pumpe P vorgesehen ist. Der sekundäre Kreislauf 2, 2a des Wärmetauschers W besteht aus dem Kreislauf der Heiz-/Kühleinrichtung S und ist mit einer Pumpe P und mit einer Thermosonde T versehen, die am Vorlauf angebracht ist, um ein Mischventil M1 zu steuern, das entweder am primären Kreislauf (Figur 4) oder am sekundären Kreislauf (Figur 3 und 5) vorgesehen ist; am sekundären Kreislauf 2, 2a ist ein Ausdehnungsgefäß A vorgesehen.

Bei der Speisung aus einem elektrischen Warmwasserspeicher E ist eine direkte Verbindung 3, 4 (Figur 5) oder eine indirekte Verbindung über einen Wärmetauscher W (Figur 6) möglich; diese letztere Lösung ist vor allem geeignet, bei der Verbindung mit einem solaren Warmwasserspeicher oder mit einem Wärmesammler.

Die Erfindung schließt nicht aus, daß der Heiz-/Kühleinrichtung mit Kapillarrohren S auch im Innenbereich des Aufbaus des Rahmens 6, 6a versehen ist, indem für diesen Bereich eine Wärmeabfuhr über natürliche oder gezwungene Konvektion vorgesehen wird.

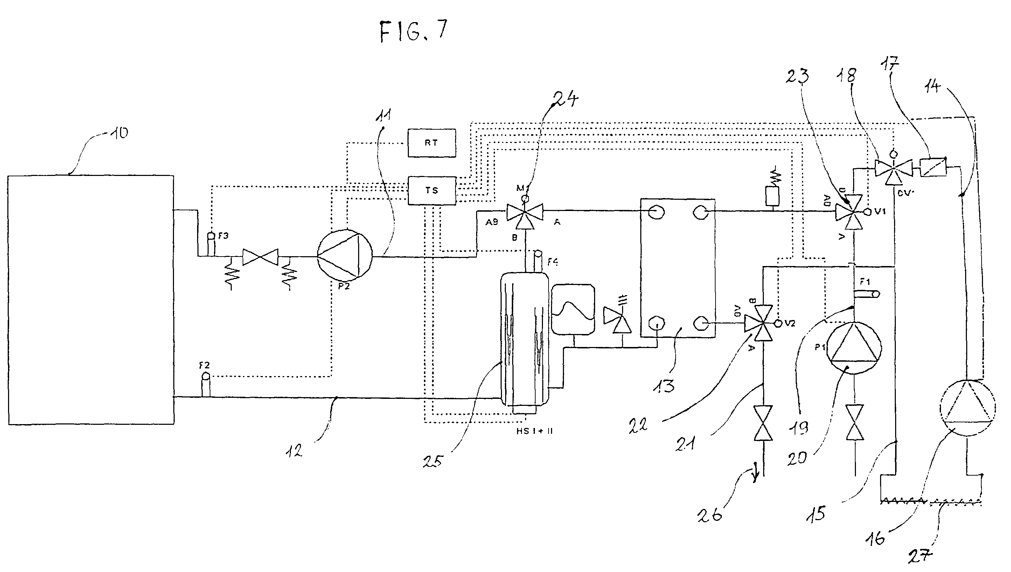

In Figur 7 ist ein Ausführungsbeispiel eines Regelsystem für Heiz- bzw. Kühleinrichtungen gezeigt, das sowohl für die Heizung als auch für die Kühlung eines Raumes Verwendung finden kann.

In diesem Fall ist ein Verbraucher 10, beispielsweise ein Heizkörper oder ein Kühlkörper, mit einem Vorlauf 11 und einem Rücklauf 12 verbunden, die jeweils mit einem Wärmetauscher 13 verbunden sind. Somit ist ein erster Mediumkreislauf gebildet.

Mit dem Wärmetauscher 13 ist ein Vorlauf 14 und ein Rücklauf 15 verbunden, wobei im Vorlauf 14 eine Pumpe 16 und ein Rückschlagventil 17 eingebaut sind. Im Vorlauf 14 ist überdies ein moduliertes Zwei- bzw. Dreiwege-Ventil 18 eingebaut, das den Durchlauf sowohl in Richtung des Wärmetauschers 13 als auch in Richtung des Rücklaufes 15 gleichzeitig in beiden Richtungen oder in der einen oder anderen Richtung erlaubt.

In den Vorlauf 14 ist überdies ein weiteres Dreiwege-Ventil 23 zwischengeschaltet, das über einen Vorlauf 19 mit Pumpe 20 mit einer nicht gezeigten Heizquelle verbunden ist, die durch einen Fühler F₁ überwacht wird, und beispielsweise unter regelmäßigen Intervallen die Zufuhr von Heizungsmittel erlaubt, sobald genügend Energie vorhanden ist.

Mit derselben Energiequelle ist überdies mit dem Rücklauf 15 des zweiten Kreislaufes über ein Dreiwege-Ventil 22 ein Rücklauf 21 verbunden.

Zweckmäßiger Weise ist im Rücklauf 12 des ersten Kreislaufes ein Fühler F₂ eingebaut, der die Oberflächentemperatur des Heizkörpers bzw. Kühlkörpers erfaßt und bei Überschreiten der Solltemperatur plus einem Toleranzwert die Flüssigkeitsmenge durch das Ventil 18 abregelt.

Zwischen dem Vorlauf 11 und dem Rücklauf 12 ist unter Zwischenschaltung eines Mischventiles 24 im Vorlauf 11 eine elektrische Heizpatrone 25 geschaltet, die Flüssigkeit aus dem Rücklauf 12 entnimmt und nach Aufheizung über das Mischventil dem Verbraucher 10 zuleitet. Diese Heizpatrone 25 wird durch den Fühler F₁ eingeschaltet, wenn nicht genügend Energie am dritten Kreislauf zur Verfügung steht.

Um eine Regelung für Kühlmittel zu erlauben, ist im Vorlauf 11 ein Fühler F₃ eingebaut, der bei Überschreiten einer vorgegebenen Temperatur auf das modulierte Dreiwege-Ventil 18 wirkt und den Vorlauf 14 direkt mit der eingeschalteten Pumpe 16 verbindet, die beispielsweise mit einem Wassernetz verbunden ist, wobei dann der Rücklauf 15 mit einem Abfluß 26 verbunden ist oder alternativ das Kühlmittel über einen Kühlaggregat 27 fließt, wobei so der zweite Kreislauf geschlossen ist und die Temperatur am Vorlauf 11 nicht einen vorgegebenen Minimalwert unterschreiten darf. Der Raumthermostat RT für Heizen oder Kühlen schaltet erst modulierend ein, sobald F₃ die Solltemperatur +/- δT erreicht hat.

## Patentansprüche

1. Regelsystem für Heiz- bzw. Kühleinrichtungen, dadurch gekennzeichnet, daß die Heiz-/Kühleinrichtungr durch einen, eventuell an der Basis (5) mit Rollorganen versehenen Tragrahmen (6, 6a), aus starren am Tragrahmen (6, 6a) befestigten Isolierplatten (7), Rohre (S) bevorzugter Weise kapillarer Art, beispielsweise nach der Art, die für Wandheizsysteme verwendet wird, eine Materialmasse hoher Wärmeleitfähigkeit (9), in der und/oder durch welche die Rohre (S) eingebettet bzw. verkleidet sind und eventuell eine an der Masse (9) angebrachte Verkleidung (10) gebildet ist.

2. Regelsystem für Heiz- bzw. Kühleinrichtungennach Anspruch 1, dadurch gekennzeichnet, daß Rohre (S), bevorzugter Weise kapillarer Art auch innerhalb des Aufbaues des Tragrahmens (6, 6a) vorgesehen sind, die auf Platten angebracht sind, die derart angeordnet sind, daß die Abgabe von Wärme durch natürliche bzw. gezwungene Konvektion erreicht wird, und daß die Rohre (S) an den Außenflächen eines Einrichtungsgegenstandes angewandt sind.

3. Regelsystem für Heiz- bzw. Kühleinrichtungennach Anspruch 1 und 2, dadurch gekennzeichnet, daß die Verbindung der Heiz-/Kühleinrichtung (S) auf unmittelbare Art und Weise, beispielsweise im Fall einer Verbindung mit elektrischen oder solaren Warmwasserspeichern (E) erfolgt, indem eine Umwälzpumpe (P1) und ein Mischventil (M1) vorgesehen werden, das durch eine am Vorlauf des Kreislaufes vorgesehene Thermosonde (T) gesteuert wird.

4. Regelsystem für Heiz- bzw. Kühleinrichtungennach Anspruch 1 oder 2, dadurch gekennzeichnet, daß die Verbindung auf mittelbare Art über einen Wärmetauscher (W) erfolgt, indem der Kreislauf (1 und 1a) des Energiesystems, der primäre Kreislauf und der Kreislauf (2, 2a) der Heiz-/Kühleinrichtung (S) und der sekundäre Kreislauf gebildet werden, und daß die thermische Regelung sowohl am primären Kreislauf als auch auf jenem sekundären über ein Mischventil (M1) erfolgen kann, das durch eine am Vorlauf des sekundären Kreislaufes angewandte Thermosonde (T) gesteuert wird.

5. Regelsystem für Heiz- bzw. Kühleinrichtungennach Anspruch 1 bis 4, dadurch gekennzeichnet, daß der Wärmetauscher (W) die Pumpen (P, P1), das Mischventil (M1) und eventuell auch das Ausdehnungsgefäß (A) alle oder teilweise in der Heiz-/Kühleinrichtung integriert sein können.

6. Regelsystem für Heiz- bzw. Kühleinrichtungennach den vorstehenden Ansprüchen, in dem ein Verbraucher (10), beispielsweise ein Heizkörper oder ein Kühlkörper, mit einem Vorlauf (11) und einem Rücklauf (12)eines ersten Kreislaufes in Verbindung steht, die jeweils mit einem Wärmetauscher (13) verbunden sind, wobei mit dem Wärmetauscher (13) ist weiters ein Vorlauf (14) und ein Rücklauf (15) eines zweiten Kreislaufes verbunden sind, dadurch gekennzeichnet daß im Vorlauf (14) des zweiten Kreislaufes eine Pumpe (16), ein Rückschlagventil (17) und ein moduliertes Zwei- bzw. Dreiwege-Ventil (18) eingebaut sind, das den Durchlauf sowohl in Richtung des Wärmetauschers (13) als auch in Richtung des Rücklaufes (15) gleichzeitig in beiden Richtungen oder in der einen oder anderen Richtung erlaubt, wobei in den Vorlauf (14) des zweiten Kreislaufes überdies ein Dreiwege-Ventil (23) zwischengeschaltet ist, das über einen Vorlauf (19) eines dritten Kreislaufes über eine Pumpe (20) mit einer Heizquelle (nicht gezeigt) verbunden ist, die durch einen Fühler (F₁ ) überwacht wird, und bei regelmäßigen Intervallen die Zufuhr von Wärmeträger erlaubt, sobald genügend Energie vorhanden ist, wobei mit derselben Energiequelle überdies über den Rücklauf (15) des zweiten Kreislaufes über ein Dreiwege-Ventil (22) ein Rücklauf (21) des dritten Kreislaufes verbunden ist, wobei im Rücklauf (12) des ersten Kreislaufes ein Fühler (F₂ )eingebaut ist, der die Oberflächentemperatur der Heiz- bzw. Kühleinrichtung erfaßt und bei Überschreiten der Solltemperatur plus einem Toleranzwert die Flüssigkeitsmenge durch das Ventil (18) abregelt, wobei zwischen dem Vorlauf (11) und dem Rücklauf (12) des ersten Kreislaufes unter Zwischenschaltung eines Mischventiles (24) im Vorlauf (11) eine elektrische Heizquelle (25) geschaltet ist, die Flüssigkeit sowohl aus dem Wärmetauscher (13) als auch aus dem Rücklauf (12) entnimmt und nach Aufheizung über das Mischventil dem Verbraucher (10) zuleitet, wobei diese Heizquelle (25) durch den Fühler (F₁ ) eingeschaltet wird, wenn nicht genügend Energie am dritten Kreislauf zur Verfügung steht.

7. Regelsystem für Heiz- bzw. Kühleinrichtungen nach Anspruch 6, dadurch gekennzeichnet, daß zur Regelung von Kühlmittel, im Vorlauf (11) ein Fühler (F₃) eingebaut ist, der bei Überschreiten einer vorgegebenen Temperatur auf das modulierte Zwei-Dreiwege-Ventil (18) wirkt und den Vorlauf (14) direkt mit der eingeschalteten Pumpe (16) verbindet, die beispielsweise mit einem Wassernetz verbunden ist, wobei dann der Rücklauf (15) mit einem Abfluß (26) verbunden ist oder alternativ das Kühlmittel über einen Kühlaggregat (27) läuft, wobei so der zweite Kreislauf geschlossen ist und die Temperatur am Vorlauf (11) nicht einen vorgegebenen Minimalwert unterschreiten darf.
